# EUROPEAN PATENT APPLICATION

(11) **EP 2 144 402 A1**
(43) Date of publication of application: **13.01.2010**
(21) Application number: 08290663.7
(22) Date of filing: 07.07.2008
(51) Int. Cl.: H04L 12/56, H04L 29/08, H04N 7/16

(54) **Method and devices for resource allocation**

(71) Applicant: Alcatel Lucent, 75008 Paris (FR)
(72) Inventor: Verhoeyen, Marc, 9700 Oudenaarde (BE); Hoebeke, Rudy, 9180 Moerbeke (BE); Haberman, Ron, Sunnyvale, CA 94087 (US); vander Elst, Walter, 2220 Heist-Op-Den-Berg (BE)
(74) Representative: BiiP cvba

(57) **Abstract**

The present invention is related to a method for establishing a communication session between a client and a server. The method comprises the steps of
- receiving at said server a request for network resources for establishing the client-server communication session, said request at least comprising an identification of the client,
- collecting at the server information on available network resources for the client-server communication session, and
- establishing the communication session with the client taking into account the information on available network resources.

## Description

### Field of the Invention

The present invention generally relates to the field of traffic management of data streams.

### Background of the Invention

Today's IP networks deal pretty well with communications requiring different Quality of Service (QoS). Either the network is over-provisioned or traffic management techniques are applied like IntServ and DiffServ. IntServ and DiffServ are well-known techniques in the art.

IntServ (Integrated Services) is a fine-grained system that specifies the elements to guarantee quality of service (QoS) on networks. IntServ can for example be used to allow video and sound to reach the receiver without interruption. The idea of IntServ is that every router in the system implements IntServ, and every application that requires some kind of guarantees has to make an individual reservation. So called "flow specs" describe what the reservation is for. IntServ is said to be flow-based. Because of the per-flow granularity, the IntServ architecture has serious difficulties to scale to the dimensions required in a Service Provider network. The scaling issue also has been one of the key reasons for this architecture not to have enjoyed a wide deployment.

DiffServ (Differentiated Services) is a computer networking architecture that specifies a simple, scalable, class-based and coarse-grained mechanism for classifying, managing network traffic and providing Quality of Service (QoS) guarantees on modern IP networks. DiffServ can, for example, be used to provide low-latency, guaranteed service to critical network traffic such as voice or video while providing simple best-effort traffic guarantees to non-critical services such as web traffic or file transfer. It particularly works well in places where lots of traffic flows are aggregated or transported across a backbone network, as all traffic is grouped into a limited set of classes, and all traffic of a given class is treated as equal (in contrast to IntServ where every traffic flow would need individual handling). DiffServ has widely been considered as a scalable and implementable architecture and can be found in most of the Service Provider IP backbone networks throughout the world.

In some client-server application sessions a flow-based allocation is the only option because the required network resources need to be compared with available network resources for proper service assurance. Note that a class-based mechanism does not imply such a comparison as a decision on how to treat a packet with respect to QoS is taken on a per packet and per class basis. If for such application overbooking is no option because of network restrictions (e.g. first mile bandwidth constraints for broadband access), only IntServ traffic management can be opted for today. Due to its complexity, the IntServ solution is not easily scaling, as already mentioned above. A further issue with IntServ is that a resource allocation phase is needed, which impacts the client-server interactivity and thus the speed of the resource allocation mechanism. Nor does IntServ allow the server to take advantage of the knowledge of how much resources are available to serve the client request.

Cisco describes in a public white paper (see *http:*//*www.cisco.com*/*en*/*US*/*solutions*/*collateral*/*ns341*/*ns524*/*ns610*/*net_implementat ion_white_paper0900aecd8057f290.html*) on their Visual Quality Experience concept an on-path procedure for Call Admission Control (CAC). It is based on RSPV (Resource Reservation Protocol), a protocol specified by IETF (RFC 2205) in support of IntServ. The proposal also addresses responsiveness to customer requests. However, the proposed solution suffers from the important drawback that the resource allocation mechanism is slown down, as it remains based on handshaking, which negatively impacts responsiveness. Further drawbacks of the proposed solution are that
- it does not allow to use the information on the availability of resources to optimize the server (i.e. scalability),
- it is intended for use in the core network and not in the access/first mile,
- it can only be used in a Layer 3 routed environment, not across MPLS (Multiprotocol Label Switching) or generic routing encapsulation tunnels and not across Layer 2 constructs such as hierarchical-VPLSNPLS (virtual private LAN service) or other layer 2 aggregation techniques.

The Dynamic Host Configuration Protocol (DHCP) and the point-to-point protocol over Ethernet (PPPoE) option 82 allow inserting bandwidth information about the first mile access (circuit). The information is restricted to the physical capacity of the link and is therefore insufficient for a server to know about the available bandwidth and to react appropriately.

Fast Channel Change (FCC) solutions exist in the market (e.g. Microsoft with Instant Channel Change (ICC), Cisco with Rapid Channel Change (RCC)). None of these solutions takes into account the available bandwidth on the first mile in order to optimize for scaling purposes.

ETSI TISPAN discusses a centralised RACF (Resource Acceptance Control Function) to resolve for a first mile video bandwidth allocation in a mixed support for both VoD and LPTV. The described solution however is relatively slow and fairly complex (e.g. due to the configuration data to be maintained per customer and the need for central servers).

### Aims of the invention

The present invention aims to provide a method and devices for data traffic management, wherein a communication session is established between a client and a server, while avoiding or overcoming the above-mentioned drawbacks of the prior art solutions.

### Summary of the Invention

The present invention provides a method for establishing a communication session between a client and a server. The method comprises the steps of
- said server receiving a request for network resources for establishing the client-server communication session, said request at least comprising an identification of the client,
- collecting at the server information on available network resources for the client-server communication session, and
- establishing the communication session with the client taking into account said information on available network resources.

In an advantageous embodiment at least a part of the information on available resources is comprised in said request for network resources. Preferably at least a part of said information is added to said request by said client. At least a part of the information may advantageously be added to the request along the transmission path between the client and the server.

In one embodiment at least a part of the information is provided by the server.

Advantageously at least a part of the information is provided by an external device capable of performing communication management.

In a preferred embodiment the communication session is a video-on-demand. The communication session is then advantageously established via a unicast stream from the server to the client.

In another preferred embodiment the communication session is a linear programming TV service.

In another embodiment the communication session is at least partially performed in a burst mode.

In another aspect the invention relates to a device arranged for acting as a server in a client-server communication session. The device comprises means for receiving a request from a client for network resources and is **characterised in that** it is further arranged for receiving information on available network resources for the client-server communication session and for establishing the communication session taking into account the information on available network resources.

In a further embodiment the invention relates to a device for use in a communication session between a client and a server. The device is **characterised in that** it is arranged for adding information on available network resources to a request to the server for network resources. Advantageously the device is further arranged for generating said request for network resources.

### Brief Description of the Drawing

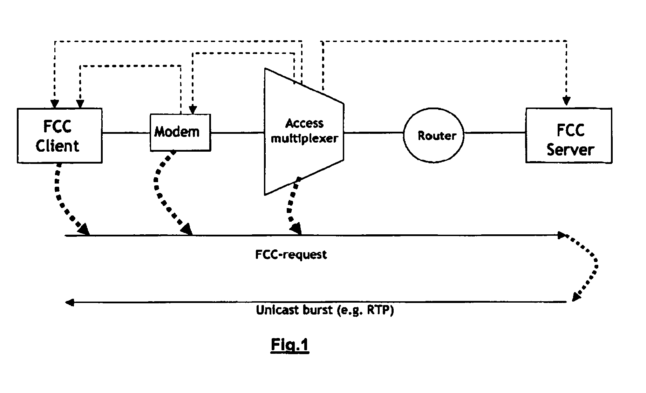

Fig. 1 represents the addition of information of available (bandwidth) resources to a request to the server according to an embodiment of the present invention.

### Detailed Description of Embodiment(s)

In the present invention a generic flow-based traffic management mechanism is proposed, wherein, according to a preferred embodiment, the information on the available network resources becomes part of the client-server session request itself and the server can react upon it without the need for any handshake or back and forth messaging.

In order to assure very fast interactivity for a client-server application using the TCP/IP protocol suite and for which (IP) network resources need to be assured, the invention proposes in one embodiment to add information elements into the client request that inform about the available resources (exports info). These information elements can be added at the origin (i.e. at the client) or inserted along the path (possibly at multiple points) to the server. On reception, the server can immediately respond accordingly, while possibly also taking into account restrictions known at the server itself, i.e. by employing the available resources or a part thereof for the said client-server application.

The client or any network device inserting info on the available resources is either aware of the available resources or is informed by an external resource management entity (or entities) for the interface(s) relevant to the client-server session. In order to make the overall reactivity high (fast issuing of a request and subsequent server action), the latency for resource usage update is important to qualify the applicability of the solution for a specific service.

A specific situation exists when a part of the available resources relevant to the client-server session do not change (often), in which case no additional latency (to export info on that part of the available resources) applies for that part. Such a static situation also exists if the available resources only change at a slow rate (i.e. when many client-server requests occur during on stable period), but where the client is kept informed by non-real-time or quasi real-time systems (e.g. by mediation of a telecom management platform).

Another specific case is when the server itself is informed on available resources related to a given client request, e.g. by an external resource management entity. In such case, the server can act autonomously, provided that the client request reveals a client identification that can be associated to the info known at the server.

Some specific embodiments of the invention in an IPTV context are discussed below.

In an IPTV application of today, both Video On Demand and LPTV (Linear Programming TV), mimicking broadcast TV as known on cable or terrestrial, are typically supported. Because of the end user's real time expectations for these services in conjunction with today's limited access bandwidths (e.g. on VDSL), the following embodiments of the invention apply in this environment.

### Fast Channel Change

When an end-user changes from one program to another in an LPTV service, he expects to see a new image shortly after pressing the selected channel on his remote control (zap). Without any special arrangements, delay quickly builds up due to delays in signalling from client to (LPTV broadcast) server itself, but also because of delays to build a new picture at the client. Indeed, highly compressed digital video signals require so-called anchor frames to quickly build a new picture at the decoder and the client has to wait (after a zap) on the next anchor frame to properly build a new picture on the screen.

A fast channel change can be implemented by the use of a fast channel change (FCC) server. Such a server is able to send a unicast stream derived from the concerned (selected) LPTV channel. The latter is normally sent in multicast to all clients that requested this channel. When a specific client (i.e. software running on a Set Top Box (STB)) changes to that channel, it first receives the unicast stream starting with an anchor frame from the past to allow immediate picture build-up, hence changing fast to the selected channel. The unicast can stop as soon as all packets from the past have been sent to the client/STB, i.e. when catch-up with the multicast stream has been realized.

For scaling purposes, the number of simultaneous unicast streams from the FCC server need to be minimized. One measure that can be taken to achieve this, is by maximizing the bandwidth at which the unicast server sends (bursting): indeed, the higher the bursting, the shorter the bursting period, which in its turn likely reduces the number of (other) simultaneous requests for bursting.

Server scaling may also be positively impacted by the short sessions (i.e. FCC bursting period), as this requires less server processing capabilities (to keep a session open).

The FCC application can hence be optimized by taking the available bandwidth along the path between the client and server into account. In a practical realization, the constraint of available bandwidth can be easily known at the server side (see Fig. 1). Following cases may be relevant (this list is non-exhaustive):
- Available bandwidth is static per client and made available at the FCC server via a central manager
- Available bandwidth is known at the access multiplexer and exported to the FCC server via a protocol (e.g. Access Node Control Protocol (ANCP), under definition by IETF, allowing to export the DSL synchronization rate; the latter is only partial information to know the available bandwidth for FCC)
- Available bandwidth is known at the access multiplexer and exported to the modem or FCC client (depending on whether the modem or client will insert this info into the FCC request).
- Available bandwidth is known at the modem and exported to the FCC client
- Available bandwidth, known at the modem or the access multiplexer, is inserted in the FCC request,
- Available bandwidth is know at an aggregation entity between the access multiplexer and the FCC server, and is inserted in the FCC request.

By inserting the available bandwidth information inside the FCC request, the FCC server can on its own determine how much it can burst. A prior art mechanism using IntServ would be suboptimal as the request for resources itself would introduce too high delays (due to handshaking) to take advantage in scaling optimizations.

As a specific implementation, one could classify clients in a number of categories that identify minimum available bandwidths in the first mile at any moment in time. Each category could then be easily coded implicitly in the FCC request (e.g. by using a set of different destination IP addresses, one per category, which all route towards the same FCC server). This is an alternative to the explicit information elements that are added to the request. E.g. a DSL access which synchronizes always at, say, 8 Mbps and for which 1 Mbps of best effort traffic is reserved can carry two video channels of 2 Mbps in parallel, still keeping 3 Mbps of bandwidth available. In other words, each video channel could add an excess rate of 1.5 Mbps or allow bursting at 3.5 Mbps.

### First mile resource allocation for IPTV

Due the restricted bandwidth of the first mile access (e.g. VDSL), the number of simultaneous video sessions for an end-user is limited. When the end-user requests for a new video session it is typically up to the network to verify if this request can be granted a.o. based on the free resources on the first mile.

In an IPTV deployment it may be sufficient to solely check on the first mile bandwidth resources to see if a video stream is possible or not. In case the available bandwidth of the first mile is coded in the Video On Demand request (as per this invention), the associated VOD-server can immediately check if service is possible and either stream the requested content or signal the end-user that no resources are available. This is much faster and easier than an alternative scheme with (central) resource broker. In such a scheme, the resource broker needs to maintain all user profiles and interface with one or more network nodes to learn about actual bandwidth usage.

The invention allows for client-server sessions to interact very fast by avoiding prior resource allocation phases. This is realized by the capability to insert information elements on available resources into the client-server request (explicitly, implicitly or by reference to a unique client identifier; the identifier makes a link with alternative ways how the info on resources is made available to the server). The invention allows for a fast server response without need to check network resource first upon a client request. It further allows optimizing servers, i.e. its scalability, by (available) resource tuned service delivery. Central maintenance of end-user and network data (e.g. user profiles) can be avoided.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for establishing a communication session between a client and a server, said method comprising the steps of
- receiving at said server a request for network resources for establishing said client-server communication session, said request at least comprising an identification of said client,
- collecting at said server information on available network resources for said client-server communication session, and
- establishing said communication session with said client taking into account said information on available network resources.

2. Method for establishing a communication session as in claim 1, wherein at least a part of said information on available resources is comprised in said request for network resources.

3. Method for establishing a communication session as in claim 2, wherein at least a part of said information is added to said request by said client.

4. Method for establishing a communication session as in claim 2 or 3, wherein at least a part of said information is added to said request along the transmission path between said client and said server.

5. Method for establishing a communication session as in any of claims 1 to 4, wherein at least a part of said information is provided by said server.

6. Method for establishing a communication session as in any of the previous claims, wherein at least a part of said information is provided by an external device capable of performing communication management.

7. Method for establishing a communication session as in any of the previous claims, wherein said communication session is a video-on-demand or a linear programming TV service.

8. Method for establishing a communication session as in any of the previous claims, wherein said communication session is established via a unicast stream from said server to said client.

9. Method for establishing a communication session as in any of the previous claims, wherein said communication session is at least partially performed in a burst mode.

10. Method for implementing a fast channel change requested by a client in a linear programming TV service, wherein the method as in claim 8 is applied and wherein the server sends an anchor frame to said client in unicast for allowing fast picture building.

11. Device arranged for acting as a server in a client-server communication session, said device comprising means for receiving a request from a client for network resources, **characterised in that** said device is further arranged for receiving information on available network resources for said client-server communication session and for establishing said communication session taking into account said information on available network resources.

12. Device for use in a communication session between a client and a server, **characterised in that** said device is arranged for adding information on available network resources to a request to said server for network resources.

13. Device as in claim 12, further arranged for generating said request for network resources.

14. Device as in claim 12, being a modem or an access multiplexer.

## Amended claims

### Amended claims in accordance with Rule 137(2) EPC.

**1.** Method for establishing a communication session between a client and a server, said method comprising the steps of
- receiving at said server a request for network resources for establishing said client-server communication session, said request at least comprising an identification of said client,
- collecting at said server information on available network resources for said client-server communication session, and
- said server establishing said communication session with said client without handshake or back and forth messaging and taking into account said information on available network resources.

**2.** Method for establishing a communication session as in claim 1, wherein at least a part of said information on available resources is comprised in said request for network resources.

**3.** Method for establishing a communication session as in claim 2, wherein at least a part of said information is added to said request by said client.

**4.** Method for establishing a communication session as in claim 2 or 3, wherein at least a part of said information is added to said request along the transmission path between said client and said server.

**5.** Method for establishing a communication session as in any of claims 1 to 4, wherein at least a part of said information is provided by said server.

**6.** Method for establishing a communication session as in any of the previous claims, wherein at least a part of said information is provided by an external device capable of performing communication management.

**7.** Method for establishing a communication session as in any of the previous claims, wherein said communication session is a video-on-demand or a linear programming TV service.

**8.** Method for establishing a communication session as in any of the previous claims, wherein said communication session is established via a unicast stream from said server to said client.

**9.** Method for establishing a communication session as in any of the previous claims, wherein said communication session is at least partially performed in a burst mode.

**10.** Method for implementing a fast channel change requested by a client in a linear programming TV service, wherein the method as in claim 8 is applied and wherein the server sends an anchor frame to said client in unicast for allowing fast picture building.

**11.** Device arranged for acting as a server in a client-server communication session, said device comprising means for receiving a request from a client for network resources, **characterised in that** said device is further arranged for receiving information on available network resources for said client-server communication session and for establishing said communication session without handshake or back and forth messaging and taking into account said information on available network resources.

**12.** Device for use in a communication session between a client and a server, **characterised in that** said device is arranged for adding information on available network resources to a request to said server for network resources.

**13.** Device as in claim 12, further arranged for generating said request for network resources.

**14.** Device as in claim 12, being a modem or an access multiplexer.
